# EUROPEAN PATENT APPLICATION

(11) **EP 3 560 973 A1**
(43) Date of publication of application: **30.10.2019**
(21) Application number: 18169949.7
(22) Date of filing: 27.04.2018
(51) Int. Cl.: C08G 18/62, C08G 18/70, C08G 18/73, C08G 18/75, C08G 18/77, C08G 18/78, C08G 18/42, C08G 18/44, C08G 18/80, C09D 175/06

(54) **COATING COMPOSITION**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to a coating composition and a method for preparing the same, a coating method and use thereof as well as a product coated with the coating composition. The coating composition comprises: A) a hydroxyl-containing component consisting of: a) a polyester-modified polycarbonate polyol having a number-average molecular weight of 500-6000 g/mol, the amount of which is greater than 50 wt. % based on that the weight of the hydroxyl-containing component is 100 wt. %, b) an optional polyester polyol having a hydroxyl content of not less than 10 wt. % as measured in accordance with DIN EN ISO 4629-2, and c) an optional polyacrylate polyol; and B) a polyisocyanate; wherein the equivalent ratio of isocyanate groups to hydroxyl groups of the composition is 0.5-1.2. A coating formed from the coating composition provided by the present invention has good appearance and adhesion as well as good reflowing, and especially can rapidly reflow at normal temperature.

## Description

### FIELD OF THE INVENTION

The present invention relates to a coating composition and a method for preparing the same, a coating method and use thereof as well as a product coated with the coating composition.

### BACKGROUND OF THE INVENTION

The scratches of certain coatings recede over time, which is referred to as "reflowing". Coating layers formed from reflowing coatings are very popular because such coating layers can restore a smooth and beautiful appearance after frequent scratching. Such coatings are very popular especially in the fields of mobile devices such as computers, vehicles, such as cars, and other products that are easily scratched on their surfaces. The coatings used in the above fields are required to have good appearance and adhesion in addition to good reflowing. Polyurethane coatings have been widely studied for their excellent appearance, adhesion and reflowing.

Existing polyurethane coatings generally comprise aliphatic or alicyclic polyisocyanates, acrylic polyols and polyester polyols. Such polyurethane coatings have already had excellent basic properties, but the surface appearance of the coating layers formed from the above coatings would be damaged and cannot be restored after frequent scratching, and the scratches can be visually observed.

Attempts have been made in the art to improve the reflowing of the existing polyurethane coatings by a combination of polyacrylate and polyester.

DE-A19824118 discloses a coating composition comprising di- and/or poly-isocyanates and polyester-polyacrylate, which has good quick-drying performance, but is not suitable for use in the automotive industry.

WO1996/020968 discloses a coating composition which comprises a polyacrylate based on alkyl-substituted alicyclic (meth)acrylate monomers or alkyl-substituted aromatic vinyl monomers, an oligoester polyol and a polyisocyanate. The coating composition can be cured slowly and at a high temperature, and therefore is not suitable for heat-sensitive materials such as plastics.

EP-A 0 896 991 discloses a coating composition comprising a polyester and a polyacrylate. The composition has poor chemical resistance.

CN101182401A discloses a coating composition which comprises an aliphatic oligocarbonate polyol, an oligoester polyol, a polyacrylate polyol and a polyisocyanate. Only when coating layers formed from the above polyurethane coating are for example oven-heated, blower-heated or infrared-heated at a certain high temperature for several hours after scratching, the scratches on their surfaces will disappear.

Accordingly, it is desirable to develop a coating capable of rapid reflowing at normal temperature.

### SUMMARY OF THE INVENTION

An object of the present invention is to provide a coating composition and a method for preparing the same, a coating method and use thereof as well as a product coated with the coating composition.

The coating composition according to the present invention comprises:
A) a hydroxyl-containing component consisting of:
   a) a polyester-modified polycarbonate polyol having a number-average molecular weight (determined by gel permeation chromatography (GPC) in accordance with DIN 55672-1:2016-03 using polystyrene as standard and tetrahydrofuran as eluent) of 500-6000 g/mol, the amount of which is greater than 50 wt. % based on that the weight of the hydroxyl-containing component is 100 wt. %,
   b) an optional polyester polyol having a hydroxyl content of not less than 10 wt. % as measured in accordance with DIN EN ISO 4629-2, and
   c) an optional polyacrylate polyol; and
B) a polyisocyanate;
   wherein the equivalent ratio of isocyanate groups to hydroxyl groups of the composition is 0.5-1.2.

According to one aspect of the present invention, a method for preparing the coating composition according to the present invention is provided, which comprises the steps of:
mixing a), optional b) and optional c) to obtain A); and
mixing A) and B) to obtain the composition.

According to another aspect of the present invention, the use of the coating composition according to the present invention in the protection of a substrate surface or a substrate surface coating is provided.

According to still another aspect of the present invention, a coating method comprising applying the coating composition according to the present invention onto a substrate is provided.

According to yet another aspect of the present invention, a coated product comprising a substrate and a coating formed by applying the coating composition according to the present invention onto the substrate is provided.

A coating formed from the coating composition of the present invention has good appearance and adhesion as well as good reflowing, and especially can rapidly reflow at normal ambient temperature.

### DETAILED DESCRIPTION OF THE INVENTION

The present invention provides a coating composition comprising: A) a hydroxyl-containing component consisting of: a) a polyester-modified polycarbonate polyol having a number-average molecular weight (determined by gel permeation chromatography (GPC) in accordance with DIN 55672-1:2016-03 using polystyrene as standard and tetrahydrofuran as eluent) of 500-6000 g/mol, the amount of which is greater than 50 wt. % based on that the weight of the hydroxyl-containing component is 100 wt. %, b) an optional polyester polyol having a hydroxyl content of not less than 10 wt. % as measured in accordance with DIN EN ISO 4629-2, and c) an optional polyacrylate polyol; and B) a polyisocyanate; wherein the equivalent ratio of isocyanate groups to hydroxyl groups of the composition is 0.5-1.2. The present invention further provides a method for preparing the coating composition, a coating method and use thereof as well as a product coated with the coating composition.

### Hydroxyl-containing component

### Polyester-modified polycarbonate polyol

The polyester-modified polycarbonate polyol can be added to the coating composition of the present invention in a form of, for example, a dispersion in a solvent. When the polyester-modified polycarbonate polyol is added in a form of a dispersion in a solvent, the amount of the polyester-modified polycarbonate polyol of the present invention refers to the amount of the polyester-modified polycarbonate polyol per se.

The polyester-modified polycarbonate polyol can be a polyester-modified aliphatic polycarbonate polyol.

The polyester-modified polycarbonate polyol has a number-average molecular weight of preferably 650-4000 g/mol, most preferably 750-2000 g/mol.

The polyester-modified polycarbonate polyol can have a hydroxyl content of 1.5-5 wt. %, preferably 1.5-3.5 wt. % as measured in accordance with DIN EN ISO 4629-2, and a viscosity of 2500-18000 mPa·s, preferably 3200-16500 mPa·s as measured in accordance with DIN EN ISO 3219.

The polyester-modified polycarbonate polyol preferably has an infrared characteristic peak at 1153-1173 cm⁻¹ measured with a Frontier™-series Fourier transform infrared spectrometer from PerkinElmer, Inc.

The polyester-modified polycarbonate polyol can have a hydroxyl group functionality of 2.

The polyester-modified polycarbonate polyol can be in an amount of 55-100 wt. %, most preferably not less than 55 wt. % and less than 80 wt. % based on that the weight of the hydroxyl-containing component is 100 wt. %.

The polyester-modified polycarbonate polyol is preferably a polycaprolactone-modified aliphatic polycarbonate polyol, most preferably a polycaprolactone-modified linear aliphatic polycarbonate polyol.

The polycaprolactone-modified linear aliphatic polycarbonate polyol comprises preferably 10-99 wt. %, more preferably 20-98 wt. % and most preferably 30-97 wt. % of caprolactone.

The polycaprolactone-modified linear aliphatic polycarbonate polyol is preferably one or more selected from the group consisting of: Desmophen® C1100 and Desmophen® C1200 available from Covestro Deutschland AG, Leverkusen, Germany (Covestro).

The polycaprolactone-modified linear aliphatic polycarbonate polyol can be prepared by ring-opening polymerization of caprolactone and a carbonic diester, wherein molecules with NH, OH or SH functional groups such as amines, alcohols, thiols or mixtures thereof are used as starters. The designed functionality and number-average molecular weight can be achieved by the selection of a starter and the control on ratio of the starter to caprolactone. The ring-opening polymerization is carried out in the presence of transesterification and/or ring-opening catalysts by means currently known to the person skilled in the art. The starter is preferably an alcohol or a mixture thereof. The carbonic diester is preferably diphenyl carbonate, for example, methyl carbonate and/or diethyl carbonate.

### Polyester polyol

The polyester polyol can be added to the coating composition of the present invention in a form of, for example, a dispersion in a solvent. When the polyester polyol is added in a form of a dispersion in a solvent, the amount of the polyester polyol of the present invention refers to the amount of the polyester polyol per se.

The polyester polyol can be in an amount of less than 50 wt. %, preferably 0-45 wt. %, and most preferably greater than 20 wt. % and not greater than 45 wt. % based on that the weight of the hydroxyl-containing component is 100 wt. %.

The polyester polyol can have a number-average molecular weight of 200-5000 g/mol, preferably 200-2000 g/mol, and a viscosity of 1500-15000 mPa·s, preferably 1900-15000 mPa·s as measured in accordance with DIN EN ISO 3219.

The polyester polyol has a hydroxyl content of preferably 10-20 wt. %, most preferably 15-17 wt. % as measured in accordance with DIN EN ISO 4629-2.

The polyester polyol is preferably a branched polyester polyol.

The branched polyester polyol is preferably one or more selected from the group consisting of: Desmophen® XP 2488 and Desmophen® VP LS 2249/1 available from Covestro.

The polyester polyol can be obtained by a method known in the art (referring to EP-A 1 404 740 and EP-A 1 477 508), preferably by a reaction of a cyclic lactone such as ε-caprolactone or γ-butyrolactone with an alcohol having a hydroxyl functionality of not less than 2.0, such as 1,2-ethylene glycol, 1,2-propanediol, 1,3-propanediol, diethylene glycol, 1,4-butanediol, 1,3-butanediol, 1,5-pentanediol, 1,6-hexanediol, 3-methyl-1,5-pentanediol, 1,12-dodecanediol, cyclohexane-1,4-dimethanol, 3(4), 8(9)-bis(hydroxymethyl)tricyclodecane, tris(hydroxymethyl)-propane, glycerol, pentaerythritol and sorbitol, etc.. Most preferably, the polyester polyol is obtained by a reaction of 1, 4-butanediol, 3-methyl-1, 5-pentanediol, 1,6-hexanediol, cyclohexane-1,4-dimethanol, tris(hydroxymethyl)propane, glycerol and pentaerythritol or a mixture thereof.

### Polyacrylate polyol

The polyacrylate polyol can be added to the coating composition of the present invention in a form of, for example, a dispersion in a solvent. When the polyacrylate polyol is added in a form of a dispersion in a solvent, the amount of the polyacrylate polyol of the present invention refers to the amount of the polyacrylate polyol per se.

The polyacrylate polyol can have a hydroxyl content of 2-5 wt. % as measured in accordance with DIN EN ISO 4629-2, and a viscosity of 2500-4000 mPa·s as measured in accordance with DIN EN ISO 3219.

The polyacrylate polyol can be in an amount of not greater than 10 wt. % based on that the weight of the hydroxyl-containing component is 100 wt. %.

The polyacrylate polyol can be obtained by a method known in the art, preferably by copolymerization of a reaction of the following components:
0-10 wt. % of an optionally functional polybutadiene having a number-average molecular weight of 500-10000 g/mol, and having a content of 1,2-pendent vinyl double bond of at least 10 mol% based on all vinyl double bonds present in the polybutadiene,
1-30 wt. % of an unsaturated aromatic monomer selected from styrene, α-methylstyrene and vinyltoluene,
20-89 wt. % of a hydroxyalkyl ester of acrylic or methacrylic acid that contains primary hydroxyl groups,
0-30 wt. % of a cycloaliphatic ester of acrylic or methacrylic acid and a C₃-C₁₂ monoalcohol,
10-60 wt. % of an aliphatic ester of acrylic or methacrylic acid and a C₁-C₈ monoalcohol,
0-5 wt. % of a α, β-unsaturated C₃-C₇-mono- or di-carboxylic acid, or of one or more semiesters of maleic or fumaric acid and a C₁-C₁₄ monoalcohol, and
0-30 wt. % of further copolymerizable compounds other than the above components,

Wherein the sum of the wt. % of all the components is 100 wt. %.

The polyacrylate polyol is more preferably obtained by copolymerization of a reaction of the following components:
0.1-8 wt. % of an optionally functional polybutadiene having a number-average molecular weight of 600-5000 g/mol, and having a content of 1,2-pendent vinyl double bond of at least 20 mol% based on all vinyl double bonds present in the polybutadiene,
2-28 wt. % of styrene,
25-85 wt. % of hydroxyethyl acrylate, hydroxyethyl methacrylate, 1,4-butanediol monoacrylate or a mixture thereof,
0-25 wt. % of a cycloaliphatic ester of acrylic or methacrylic acid and a C₃-C₁₂ monoalcohol,
15-60 wt. % of an aliphatic ester of acrylic or methacrylic acid and a C₁-C₈ monoalcohol,
0-4 wt. % of a component being one or more selected from the group consisting of: acrylic acid, methacrylic acid, and maleic acid semiesters and fumaric acid semiesters of the corresponding acid and a C₁-C₈ monoalcohol, and
0-25 wt. % of a component being one or more selected from the group consisting of: acrylonitrile, methacrylonitrile, hydroxypropyl (meth)acrylate, vinyl esters of an aliphatic, optionally branched C₁-C₁₀-monocarboxylic acid, and dialkyl or dicycloalkyl esters of maleic or fumaric acid and a C₃-C₈ monoalcohol,
wherein the sum of the wt. % of all the components is 100 wt. %.

The polyacrylate polyol is even more preferably obtained by copolymerization of a reaction of the following components:
0.2-6.0 wt. % of an optionally functional polybutadiene having a number-average molecular weight of 700-4000 g/mol, and having a content of 1,2-pendent vinyl double bond of at least 30 mol% based on all vinyl double bonds present in the polybutadiene,
5-25 wt. % of styrene,
30-75 wt. % of hydroxyethyl acrylate, hydroxyethyl methacrylate or a mixture thereof,
0-20 wt. % of a component being one or more selected from the group consisting of: isobornyl acrylate, isobornyl methacrylate, cyclohexyl (meth)acrylate, 3,5,5-trimethylcyclohexyl (meth)acrylate and 4-tert-butylcyclohexyl (meth)acrylate,
20-50 wt. % of a component being one or more selected from the group consisting of: esters of acrylic or methacrylic acid and an aliphatic C₁-C₈ monoalcohol,
0.1-3 wt. % of acrylic acid, methacrylic acid or a mixture thereof, and
0-20 wt. % of a component being one or more selected from the group consisting of: acrylonitrile, methacrylonitrile, hydroxypropyl (meth)acrylate, vinyl esters of an aliphatic, optionally branched C₁-C₁₀-monocarboxylic acid, and dialkyl or dicycloalkyl esters of maleic or fumaric acid and a C₃-C₈ monoalcohol,
wherein the sum of the wt. % of all the components is 100 wt. %.

The polyacrylate polyol is most preferably obtained by copolymerization of a reaction of the following components:
0.4-1 wt. % of an optionally functional polybutadiene having a number-average molecular weight of 750-3500 g/mol, and having a content of 1,2-pendent vinyl double bond of at least 40 mol% based on all vinyl double bonds present in the polybutadiene,
5-20 wt. % of styrene,
30-70 wt. % of hydroxyethyl acrylate, hydroxyethyl methacrylate or a mixture thereof,
0-15 wt. % of a component being one or more selected from the group consisting of: isobornyl acrylate, isobornyl methacrylate, cyclohexyl (meth)acrylate, 3,5,5-trimethylcyclohexyl (meth)acrylate and 4-tert-butylcyclohexyl (meth)acrylate,
25-45 wt. % of an ester of acrylic or methacrylic acid and an aliphatic C₁-C₄ monoalcohol,
0.3-2 wt. % of acrylic acid, methacrylic acid or a mixture thereof, and
0-15 wt. % of a component being one or more selected from the group consisting of: hydroxypropyl (meth) acrylate, vinyl esters of an aliphatic, optionally branched C₁-C₉-monocarboxylic acid, and dialkyl or di(cyclo)alkyl esters of maleic or fumaric acid and a C₃-C₆ monoalcohol,
wherein the sum of the wt. % of all the components is 100 wt. %.

The above components are polymerized in the presence of a radical initiator at a temperature of preferably 80-240 °C, more preferably 100-220 °C and most preferably 120-200 °C and a pressure of not higher than 15 bar.

The copolymerization of the above components can be carried out in the presence of a solvent. A suitable solvent can be one or more selected from the group consisting of: aliphatic, cycloaliphatic and aromatic hydrocarbons, for example, alkylbenzenes such as toluene and xylene; esters such as ethyl acetate, n-propyl acetate, isopropyl acetate, n-butyl acetate, n-hexyl acetate, 2-ethylhexyl acetate, ethyl propionate, butyl propionate, pentyl propionate, ethylene glycol monoethyl ether acetate, the corresponding methyl ether acetate, and methoxypropyl acetate; ethers such as ethylene glycol acetate mono-methyl, -ethyl or -butyl ether; ketones such as acetone, methyl ethyl ketone, methyl isobutyl ketone, methyl n-amyl ketone, and mixtures of the above solvents.

The copolymerization can be carried out continuously or discontinuously.

The radical initiator can be selected from those commonly used in the art, for example, azo- or peroxide-based radical initiators, and those which only have a polymerization half-life of about 5 seconds to 30 minutes in the above copolymerization reaction temperature range.

The initiator is preferably one or more selected from the group consisting of: 2,2'-azobis(2-methylpropionitrile), 2,2'-azobis(2-methylbutyronitrile), 1,1'-azobis(cyclohexanecarbonitrile), tert-butylperoxy 2-ethylhexanoate, tert-butylperoxy diethylacetate, tert-butylperoxy isobutyrate, 1,1-di-tert-butylperoxy-3,3,5-trimethylcyclohexane, 1,1-di-tert-butylperoxycyclohexane, tert-butylperoxy 3,5,5-trimethylhexanoate, tert-butylperoxy isopropyl carbonate, tert-butylperoxy acetate, tert-butylperoxy benzoate, dicumyl peroxide, tert-butylcumyl peroxide, di-tert-butyl peroxide and di-tert-amyl peroxide.

### Polyisocyanate

The polyisocyanate herein includes terminated polyisocyanates and non-terminated polyisocyanates. When the polyisocyanate is a terminated polyisocyanate, the isocyanate group functionality refers to the functionality after the termination of the terminated polyisocyanate is removed.

The polyisocyanate can have an isocyanate group functionality of not less than 2, preferably not less than 3 and most preferably not less than 4.

The polyisocyanate can have an isocyanate group content of 10-25 wt. % as measured in accordance with DIN-EN ISO 11909, and a viscosity of 450-10000 mPa·s as measured in accordance with DIN EN ISO 3219.

The polyisocyanate can be one or more selected from the group consisting of: aliphatic diisocyanates, alicyclic diisocyanates, aromatic diisocyanates, aliphatic triisocyanates, alicyclic triisocyanates, aromatic triisocyanates and their derivatives having iminooxadiazinedione, isocyanurate, uretdione, carbamate, allophanate, biuret, urea, oxadiazinetrione, oxazolidone, acylurea and/or carbodiimide structures; preferably one or more selected from the group consisting of: aliphatic diisocyanates, aliphatic triisocyanates, alicyclic diisocyanates, alicyclic triisocyanates and their derivatives having iminooxadiazinedione, isocyanurate, uretdionec, carbamate, allophanate, biuret, urea, oxadiazinetrione, oxazolidone, acylurea and/or carbodiimide structures; more preferably selected from derivatives of hexamethylene diisocyanate, isophorone diisocyanate or pentamethylene diisocyanate having iminooxadiazinedione, isocyanurate, allophanate, biuret, oxadiazinetrione, oxazolidone and/or acylurea structures; and most preferably one or more selected from the group consisting of: hexamethylene diisocyanate-allophanate trimers, hexamethylene diisocyanate biuret, hexamethylene diisocyanate dimers, silicone-modified hexamethylene diisocyanate polymers, isophorone diisocyanate trimers, thermolatent hexamethylene diisocyanate trimers and pentamethylene diisocyanate trimers.

The derivatives are those having two or more free or potentially free isocyanate groups.

### Reactive diluent

The coating composition can further comprise an additional organic polyhydroxyl compound and/or an amine reactive diluent.

The additional organic polyhydroxyl compound can be selected from polyether polyols, polyurethane polyols, polycarbonate polyols, polyester polyols and polyacrylate polyols, preferably polyacrylate polyols and/or polyester polyols.

The amine reactive diluent can be selected from compounds having a terminated amino group, such as aldehydeamines or ketoamines, or those containing amino groups that are still free but have diminished reactivity, such as aspartates.

The amine reactive diluent preferably contains more than one (terminated) amino group.

The reactive diluent can be in an amount of less than 50 wt. %, preferably not more than 30 wt. % based on that the weight of the hydroxyl-containing component is 100 wt. %.

The amount of the reactive diluent is most preferably 0 wt. % based on that the weight of the hydroxyl-containing component is 100 wt. %, i.e. the coating composition preferably does not comprise other polyol components or amino-containing components except the above hydroxyl-containing component.

### Equivalent ratio of isocyanate groups to hydroxyl groups

The equivalent ratio of isocyanate groups to hydroxyl groups of the composition is preferably 0.9-1.2, most preferably 1.0-1.2.

When the composition further comprises an amine reactive diluent, the equivalent ratio of isocyanate groups to isocyanate-reactive groups of the composition is preferably 0.9-1.2, most preferably 1.0-1.2. The isocyanate-reactive groups can be hydroxyl groups and/or amino groups.

### Solvent

The composition can further comprise a solvent. The solvent can be selected from those known to the person skilled in the art, preferably one or more of the group consisting of: butyl acetate, xylene and propylene glycol methyl ether acetate.

The amount of the solvent is not limited as long as the performance of the coating composition of the present invention is not affected.

### Additive

The coating composition can further comprise conventional additives in coating industry, for example, one or more of the group consisting of: inorganic or organic pigments, organic light stabilizers, free radical blockers, dispersants, flowing agents, thickeners, antifoaming agents, adhesives, bactericides, stabilizers, inhibitors and catalysts.

The catalysts are used to accelerate the reaction of component A and component B to obtain the coating composition.

The catalysts can be commercially available organometallic compounds of the elements including aluminum, tin, zinc, titanium, manganese, iron, bismuth or zirconium, such as dibutyltin laurate, zinc octoate or titanium tetraisopropylate, and can also be tertiary amines such as 1,4-di-azabicyclo-[2.2.2]-octane.

### Substrate

The substrate can be selected from artificial stones, woods, artificial woods, marbles, terrazzos, ceramics, linoleums, metals, mineral materials, plastics, rubbers, concretes, composite boards, papers, leathers and glasses.

### Coated product

The product can be selected from windows, mirrors, furnitures, floors, vehicles, road signs, bridges, books, films and boxes, most preferably selected from furnitures, floors, films and vehicles.

The coating can have a thickness of 15-100 µm, preferably 30-50 µm.

### EXAMPLES

Unless otherwise defined, all technical and scientific terms used herein have the same meaning as commonly understood by those skilled in the art the present invention belongs to. When the definition of a term in the present description conflicts with the meaning as commonly understood by those skilled in the art the invention belongs to, the definition described herein shall apply.

Unless otherwise specified, all numerical values expressing amount of ingredients, reaction conditions and the like which are used in the description and claims are to be understood as being modified by the term "about". Accordingly, unless indicated to the contrary, the numerical values and parameters described herein are approximate values which are capable of being changed according to the desired performance obtained as required.

The term "and/or" used herein refers to one or all of the elements mentioned.

The terms "including" and "comprising" used herein respectively cover the case that only the elements mentioned present and the case that other unmentioned elements in addition to the elements mentioned present.

All percentages in the present invention refer to weight percentage, unless otherwise specified.

The analysis and measurement for the present invention are carried out at 23±2 °C and a humidity of 50±5 %, unless otherwise specified.

Whenever mentioned herein, be it in the description of the Examples or the Specification, the number average molecular weight of a polymer is determined by gel permeation chromatography (GPC) in accordance with DIN 55672-1:2016-03 using polystyrene as standard and tetrahydrofuran as eluent.

Gloss is measured for three times by a multi-angle photometer to take an average value according to GB/T 9754-1988.

Adhesion is measured according to GB/T9286-1988, wherein the cutting spacing is 2 mm and the adhesive tape is 3M scotch 600#.

Scratch test: the coating surface is scratched using a copper brush or a steel wool 000# at a testing load of 800 g for ten rounds (one forward and backward scratch is recorded as one round), the reflowing effect of the coating surface are observed at room temperature, and the time required for restoration is recorded. The rating standard for the reflowing effect is as follows: [++] excellent, [+] good, [-] medium and [--] poor. [++] excellent: the scratches in a test area can be self-repaired and completely disappear. [+] good: the scratches in a test area can be self-repaired and substantially disappear. [-] medium: it is difficult for the scratches in a test area to be self-repaired and the scratches slightly disappear. [--] poor: the scratches in a test area cannot be self-repaired and do not disappear. The maximum waiting time for testing the reflowing effect is 48 h. The time required for reflowing to the time required for scratches on the coating surface to disappear, and this time is recorded as N/A when the scratches on the coating surface cannot disappear.

Solvent resistance test: 100 % pure cotton soft gauzes (300*300 mm) are used, wherein a gauze soaked with butanone is used to wipe a test area for 50 rounds, a gauze soaked with 0.1 mol sodium hydroxide is used to wipe a test area for 100 rounds, and a gauze soaked with 98 % ethanol is used to wipe a test area for 200 rounds, respectively, at a testing load of 1000 g and a rate of 60 rounds/min, and the test areas are wiped forwards and backwards (one forward and backward wiping is recorded as one round). The standard for the sample passing the solvent resistance test: when the coating appearance is visually observed, the coating cannot be worn out, softened and dissolved, and the substrate is not exposed.

The content of hydroxyl groups is determined according to DIN EN ISO 4629-2.

The content of isocyanate groups (NCO) is determined by volume according to DIN-EN ISO 11909, and the measured data include the free and potentially free NCO content.

The isocyanate group functionality is determined by GPC.

The viscosity is measured according to DIN EN ISO 3219.

### Raw materials and reagents

Desmophen® C 1100: a polycaprolactone-modified linear aliphatic polycarbonate polyol, having a solid content of 100 wt. %, a hydroxyl content of about 3.3 wt. %, a viscosity of about 3200 mPa·s and a number-average molecular weight of 1000 g/mol, and available from Covestro.
Desmophen® C 1200: a polycaprolactone-modified linear aliphatic polycarbonate polyol, having a solid content of 100 wt. %, a hydroxyl content of about 1.7 wt. %, a viscosity of about 16500 mPa·s and a number-average molecular weight of 2000 g/mol, and available from Covestro.
Desmophen® C XP 2613: an aliphatic polycarbonate polyol, having a solid content of 100 wt. %, a hydroxyl content of about 1.7 wt. %, a viscosity of about 3500 mPa·s and a number-average molecular weight of 2000 g/mol, and available from Covestro.
Desmophen® C 3200 XP: an aliphatic polycarbonate polyol, having a solid content of 100 wt. %, a hydroxyl content of about 1.7 wt. %, a viscosity of about 64000 mPa·s and a number-average molecular weight of 2000 g/mol, and available from Covestro.
Desmophen® XP 2488: a branched polyester polyol, having a solid content of 100 wt. %, a hydroxyl content of about 16.0 wt. %, a viscosity of about 12250 mPa·s s and a number-average molecular weight of 450 g/mol, and available from Covestro.
Desmophen® VP LS 2249/1: a branched polyester polyol, having a solid content of 100 wt. %, a hydroxyl content of about 15.5 wt. %, a viscosity of about 1900 mPa·s s and a number-average molecular weight of 360 g/mol, and available from Covestro.
Desmophen® 670: a branched polyester polyol, having a solid content of 100 wt. %, a hydroxyl content of about 4.3 wt. %, a viscosity of about 2200 mPa·s (measured when the solid content is 80 wt. %) and a number-average molecular weight of 1600 g/mol, and available from Covestro.
Desmophen® 1100: a branched polyester polyol, having a solid content of 100 wt. %, a hydroxyl content of about 6.5 wt. %, a viscosity of about 30500 mPa·s s and a number-average molecular weight of 930 g/mol, and available from Covestro.
Desmophen® 1200: a branched polyester polyol, having a solid content of 100 wt. %, a hydroxyl content of about 5.0 wt. %, a viscosity of about 23500 mPa·s s and a number-average molecular weight of 960 g/mol, and available from Covestro.
Desmophen® VP LS 2328: a linear polyester polyol, having a solid content of 100 wt. %, a hydroxyl content of about 7.95 wt. %, a viscosity of about 800 mPa·s and a number-average molecular weight of 650 g/mol, and available from Covestro.
Setalux® D A 870 BA: a polyacrylate polyol, having a solid content of 70 wt. %, a hydroxyl content of about 2.95 wt. % and a viscosity of about 3500 mPa·s, and available from Nuplex Resins (Suzhou) Co., Ltd.
Desmodur® N 3580 BA: a polyisocyanate (an HDI allophanate trimer), having a solid content of 80 wt. %, a NCO functionality of about 4.5, a NCO content of about 15.4% and a viscosity of about 500 mPa·s, and available from Covestro.
Desmodur® N 100: a polyisocyanate (an HDI biuret), having a solid content of 100 wt. %, a NCO functionality of about 3.6, a NCO content of about 22.0 wt. % and a viscosity of about 10000 mPa·s, and available from Covestro.
Desmodur® N 3300: a polyisocyanate (an HDI trimer), having a solid content of 100 wt. %, a NCO functionality of about 3.4, a NCO content of about 21.8% and a viscosity of about 3000 mPa·s, and available from Covestro.
Desmodur® N 3600: a polyisocyanate (an HDI trimer), having a solid content of 100 wt. %, a NCO functionality of about 3.0, a NCO content of about 23.0% and a viscosity of about 1200 mPa·s, and available from Covestro.
Desmodur® XP 2840: a polyisocyanate (an HDI dimer), having a solid content of 100 wt. %, a NCO functionality of about 2.8, a NCO content of about 23.0% and a viscosity of about 500 mPa·s, and available from Covestro.
Desmodur® 2873: a polyisocyanate (a silicone-modified HDI polyisocyanate), having a solid content of 100 wt. %, a NCO functionality of about 2.0, a NCO content of about 11.8% and a viscosity of about 450 mPa·s, and available from Covestro.
Desmodur® Z 4470 BA: a polyisocyanate (an IPDI trimer), having a solid content of 70 wt. %, a NCO functionality of about 3.4, a NCO content of about 11.9 % and a viscosity of about 600 mPa·s, and available from Covestro.
Desmodur® blulogiq 3190: a polyisocyanate (a thermolatent HDI trimer), having a solid content of 90 wt. %, a NCO functionality of about 3.4, a NCO content of about 19.1% and a viscosity of about 650 mPa·s, and available from Covestro.
Desmodur® BL 3175 SN: a polyisocyanate (a blocked HDI trimer), having a solid content of 75 wt. %, a NCO functionality of about 3.4, a NCO content of about 11.1% and a viscosity of about 3300 mPa·s, and available from Covestro.
Desmodur® eco N 7300: a polyisocyanate (a bio-based PDI trimer), having a solid content of 100 wt. %, a NCO functionality of about 3.4, a NCO content of about 21.9% and a viscosity of about 9500 mPa·s, and available from Covestro.
Butyl acetate: having a content of ≥99.5 % (analytically pure) and available from Shanghai Lingfeng Chemical Reagent Co., Ltd.
Xylene: having a content of ≥99.5 % (analytically pure) and available from Shanghai Lingfeng Chemical Reagent Co., Ltd.
Propylene glycol methyl ether acetate: having a content of ≥99.5 % (analytically pure) and available from Shanghai Lingfeng Chemical Reagent Co., Ltd.

### Method for preparing the coating compositions of Inventive Examples and Comparative Examples

According to the components listed in the following tables, a polyester-modified polycarbonate polyol, an optional polyester polyol and an optional polyacrylate polyol were respectively added to a vessel, and then a mixed solvent of butyl acetate, xylene and propylene glycol methyl ether acetate, Tego® Wet KL 245 and BYK 358 N were added individually. The vessel was placed under a dispersion machine to disperse the components for 10-15 minutes at 1000-1500 rpm (2.1-3.2 m/s) such that the above components were fully and evenly stirred. A polyisocyanate was then added to the vessel, and the vessel was placed under the dispersion machine to disperse the components for 5-10 minutes at 500-1000 rpm (1-2.1 m/s) to obtain a coating composition.

### Method for preparing coatings

The coating composition was sprayed on a substrate (Bayblend® T85, available from Covestro) by an air spray gun, flash off at room temperature for 10-15 minutes, then placed in a circulating air oven and baked for 30-40 minutes to obtain a coating having a thickness of about 35-45 µm.

**Table 1: the components and performance test results of Inventive Examples 1-4 and Comparative Examples 1-3 (unit of each component: g)**

| **Components** | | | **Comp. Ex. 1** | **Comp. Ex. 2** | **Comp. Ex. 3** | **Example 1** | **Example 2** | **Example 3** | **Example 4** |
|---|---|---|---|---|---|---|---|---|---|
| Desmophen® XP 2488 | | | 47.5 | 38.0 | 28.5 | 21.3 | 16.7 | 9.5 | - |
| Desmophen® C 1100 | | | - | 9.5 | 19.0 | 26.2 | 31.0 | 38.0 | 47.5 |
| Butyl acetate/xylene/propylene glycol methyl ether acetate (formulated in a mixing ratio of 1:1:1 by mass) | | | 99.0 | 90.0 | 81.0 | 74.0 | 69.0 | 62.2 | 52.6 |
| Tego® Wet KL 245 | | | 0.2 | 0.2 | 0.2 | 0.2 | 0.2 | 0.2 | 0.2 |
| BYK 358 N | | | 0.1 | 0.1 | 0.1 | 0.1 | 0.1 | 0.1 | 0.1 |
| Desmodur® N 3580 BA | | | 122.0 | 103.0 | 83.0 | 69.0 | 59.0 | 45.0 | 25.0 |
| **NCO/OH equivalent ratio** | | | 1.0 | 1.0 | 1.0 | 1.0 | 1.0 | 1.0 | 1.0 |
| **Performance test results** | | | | | | | | | |
| Adhesion | | | 5B | 5B | 5B | 5B | 5B | 5B | 5B |
| Gloss (60°) | | | 89 | 88 | 89 | 89 | 91 | 88 | 89 |
| Scratch test | Copper brush | Reflowing effect | -- | -- | -- | + | ++ | + | + |
| | | Time required for reflowing | N/A | N/A | N/A | <15 min | <1 min | <1 min | <5 min |
| | Steel wool 000# | Reflowing effect | -- | -- | -- | + | ++ | ++ | + |
| | | Time required for reflowing | N/A | N/A | N/A | <5 min | <1 min | <1 min | <5 min |
| Solvent resistance test | Butanone | | Pass | Pass | Pass | Pass | Pass | Fail | Fail |
| | 0.1 mol sodium hydroxide solution | | Pass | Pass | Pass | Pass | Pass | Pass | Pass |
| | 98% ethanol | | Pass | Pass | Pass | Pass | Pass | Pass | Fail |

It can be seen from Table 1 that a coating formed from a coating composition comprising a suitable amount of a polyester-modified polycarbonate polyol, an optional polyester polyol and a polyisocyanate has good appearance and adhesion as well as rapid reflowing at normal temperature. When the coating composition comprises the polyester-modified polycarbonate polyol in amount not less than 55 wt. % and less than 80 wt. %, and the polyester polyol in amount of greater than 20 wt. % and not greater than 45 wt. %, a coating formed from the coating composition further has good solvent resistance.

**Table 2: the components and performance test results of Inventive Examples 5-8 and Comparative Example 4 (unit of each component: g)**

| **Components** | | | **Comp. Ex. 4** | **Example 5** | **Example 6** | **Example 7** | **Example 8** |
|---|---|---|---|---|---|---|---|
| Desmophen® XP 2488 | | | 23.8 | 19.1 | 14.3 | 16.7 | 16.7 |
| Desmophen® C 1200 | | | 23.8 | 28.7 | 33.4 | 5.0 | 10.0 |
| Desmophen® C 1100 | | | - | - | - | 31.0 | 31.0 |
| Butyl acetate/xylene/propylene glycol methyl ether acetate (formulated in a mixing ratio of 1:1:1 by mass) | | | 73.0 | 68.0 | 63.0 | 74.0 | 79.0 |
| Tego® Wet KL 245 | | | 0.2 | 0.2 | 0.2 | 0.2 | 0.2 |
| BYK 358 N | | | 0.1 | 0.1 | 0.1 | 0.1 | 0.1 |
| Desmodur® N 3580 BA | | | 68.0 | 57.0 | 46.0 | 60.0 | 62.0 |
| **NCO/OH equivalent ratio** | | | 1.0 | 1.0 | 1.0 | 1.0 | 1.0 |
| **Performance test results** | | | | | | | |
| Adhesion | | | 5B | 5B | 5B | 5B | 5B |
| Gloss (60°) | | | 89 | 88 | 90 | 90 | 90 |
| Scratch test | Copper brush | Reflowing effect | -- | + | + | ++ | ++ |
| | | Time required for reflowing | N/A | <60 min | <15 min | <1 min | <1 min |
| | Steel wool 000# | Reflowing effect | -- | ++ | ++ | ++ | ++ |
| | | Time required for reflowing | N/A | <30 min | <15 min | <1 min | <1 min |

It can be seen from Table 2 that, when the amount of the polyester-modified polycarbonate polyol is greater than 50 wt. %, a coating formed from the coating composition has good appearance and adhesion as well as rapid reflowing at normal temperature.

**Table 3: the components and performance test results of Inventive Examples 2 & 9 and Comparative Examples 5-8 (unit of each component: g)**

| **Components** | | | **Example 2** | **Example 9** | **Comp. Ex. 5** | **Comp. Ex. 6** | **Comp. Ex. 7** | **Comp. Ex. 8** |
|---|---|---|---|---|---|---|---|---|
| Desmophen® XP 2488 | | | 16.7 | - | 16.7 | 16.7 | 16.7 | 16.7 |
| Desmophen® VP LS 2249/1 | | | - | 16.7 | | | | |
| Desmophen® 670 | | | - | - | 31.0 | - | - | - |
| Desmophen® 1100 | | | - | - | - | 31.0 | - | - |
| Desmophen® 1200 | | | - | - | - | - | 31.0 | - |
| Desmophen® VP LS 2328 | | | - | - | - | - | - | 31.0 |
| Desmophen® C 1100 | | | 31.0 | 31.0 | - | - | - | - |
| Butyl acetate/xylene/propylene glycol methyl ether acetate (formulated in a mixing ratio of 1:1:1 by mass) | | | 69.0 | 68.0 | 72.0 | 76.0 | 73.0 | 80.0 |
| Tego® Wet KL 245 | | | 0.2 | 0.2 | 0.2 | 0.2 | 0.2 | 0.2 |
| BYK 358 N | | | 0.1 | 0.1 | 0.1 | 0.1 | 0.1 | 0.1 |
| Desmodur® N 3580 BA | | | 59.0 | 58.0 | 65.0 | 75.0 | 68.0 | 83.0 |
| **NCO/OH equivalent ratio** | | | 1.0 | 1.0 | 1.0 | 1.0 | 1.0 | 1.0 |
| **Performance test results** | | | | | | | | |
| Adhesion | | | 5B | 5B | 5B | 5B | 5B | 5B |
| Gloss (60°) | | | 91 | 85 | 89 | 78 | 87 | 85 |
| Scratch test | Copper brush | Reflowing effects | ++ | ++ | -- | -- | -- | - |
| | | Time required for reflowing | <1 min | <1 min | N/A | N/A | N/A | N/A |
| | Steel wool 000# | Reflowing effects | ++ | ++ | -- | -- | -- | - |
| | | Time required for reflowing | <1 min | <1 min | N/A | N/A | N/A | N/A |

It can be seen from Table 3 that, when the coating composition does not comprise a polyester-modified polycarbonate polyol, a coating formed from the coating composition has very poor reflowing at normal temperature.

**Table 4: the components and performance test results of Inventive Example 2 and Comparative Examples 9-10 (unit of each component: g)**

| **Components** | | | **Example 2** | **Comp. Ex. 9** | **Comp. Ex. 10** |
|---|---|---|---|---|---|
| Desmophen® XP 2488 | | | 16.7 | 16.7 | 16.7 |
| Desmophen® C 1100 | | | 31.0 | - | - |
| Desmophen® XP 2613 | | | - | 31.0 | - |
| Desmophen® C 3200 XP | | | - | - | 31.0 |
| Butyl acetate/xylene/propylene glycol methyl ether acetate (formulated in a mixing ratio of 1:1:1 by mass) | | | 69.0 | 65.0 | 65.0 |
| Tego® Wet KL 245 | | | 0.2 | 0.2 | 0.2 |
| BYK 358 N | | | 0.1 | 0.1 | 0.1 |
| Desmodur® N 3580 BA | | | 59.0 | 52.0 | 52.0 |
| **NCO/OH equivalent ratio** | | | 1.0 | 1.0 | 1.0 |
| **Performance test results** | | | | | |
| Adhesion | | | 5B | 5B | 5B |
| Gloss (60°) | | | 91 | 70 | 90 |
| Scratch test | Copper brush | Reflowing effects | ++ | -- | - |
| | | Time required for reflowing | <1 min | N/A | N/A |
| | Steel wool 000# | Reflowing effects | ++ | -- | - |
| | | Time required for reflowing | <1 min | N/A | N/A |

It can be seen from Table 4 that a coating formed from a coating composition comprising a suitable amount of a polyester-modified polycarbonate polyol, a polyester polyol and a polyisocyanate has significantly improved rapid reflowing at normal temperature as compared to a coating formed from a coating composition comprising a suitable amount of a polyester polyol, a polycarbonate polyol and a polyisocyanate.

**Table 5: the components and performance test results of Inventive Examples 2 & 10 and Comparative Examples 11-12 (unit of each component: g)**

| **Components** | | | **Example 2** | **Example 10** | **Comp. Ex. 11** | **Comp. Ex. 12** |
|---|---|---|---|---|---|---|
| Desmophen® XP 2488 | | | 16.7 | 16.7 | 16.7 | 16.7 |
| Desmophen® C 1100 | | | 31.0 | 31.0 | 31.0 | 31.0 |
| Setalux® D A 870 BA | | | - | 4.8 | 14.3 | 23.9 |
| Butyl acetate/xylene/propylene glycol methyl ether acetate (formulated in a mixing ratio of 1:1:1 by mass) | | | 69.0 | 72.0 | 76.0 | 81.0 |
| Tego® Wet KL 245 | | | 0.2 | 0.2 | 0.2 | 0.2 |
| BYK 358 N | | | 0.1 | 0.1 | 0.1 | 0.1 |
| Desmodur® N 3580 BA | | | 59.0 | 62.0 | 66.0 | 71.0 |
| **NCO/OH equivalent ratio** | | | 1.0 | 1.0 | 1.0 | 1.0 |
| **Performance test results** | | | | | | |
| Adhesion | | | 5B | 5B | 5B | 5B |
| Gloss (60°) | | | 91 | 90 | 90 | 90 |
| Scratch test | Copper brush | Reflowing effects | ++ | + | - | - |
| | | Time required for reflowing | <1 min | <5 min | <15 min | <30 min |
| | Steel wool 000# | Reflowing effects | ++ | ++ | - | - |
| | | Time required for reflowing | <1 min | <1 min | <15 min | <30 min |

It can be seen from Table 5 that, when the amount of the polyacrylate is not more than 10 wt. % based on that the weight of the hydroxyl-containing component is 100 wt. %, a coating formed from the coating composition has good appearance and adhesion as well as rapid reflowing at normal temperature.

**Table 6: the components and performance test results of Inventive Examples 2 and 11-20 (unit of each component: g)**

| | | | **Example** | | | | | | | | | | |
|---|---|---|---|---|---|---|---|---|---|---|---|---|---|
| **Components** | | | **2** | **11** | **12** | **13** | **14** | **15** | **16** | **17** | **18** | **19** | **20** |
| Desmophen® XP 2488 | | | 16.7 | 16.7 | 16.7 | 16.7 | 16.7 | 16.7 | 16.7 | 16.7 | 16.7 | 16.7 | 16.7 |
| Desmophen® C 1100 | | | 31.0 | 31.0 | 31.0 | 31.0 | 31.0 | 31.0 | 31.0 | 31.0 | 31.0 | 31.0 | 31.0 |
| Butylacetate/xylene/ propylene glycol methyl ether acetate (formulated in a mixing ratio of 1:1:1 by mass) | | | 69.0 | 76.0 | 76.0 | 74.0 | 74.0 | 107.0 | 69.0 | 69.0 | 72.0 | 72.0 | 76.0 |
| BYK 358 N | | | 0.1 | 0.1 | 0.1 | 0.1 | 0.1 | 0.1 | 0.1 | 0.1 | 0.1 | 0.1 | 0.1 |
| Tego® Wet KL 245 | | | 0.2 | 0.2 | 0.2 | 0.2 | 0.2 | 0.2 | 0.2 | 0.2 | 0.2 | 0.2 | 0.2 |
| Desmodur® N 3580 BA | | | 59.0 | - | - | - | - | - | 57.0 | 55.0 | - | - | - |
| Desmodur® N 100 | | | - | 42.0 | - | - | - | - | - | - | - | - | - |
| Desmodur® N 3300 | | | - | - | 42.0 | - | - | - | - | - | - | - | - |
| Desmodur ®N 3600 | | | - | - | - | 40.0 | - | - | - | - | - | - | - |
| Desmodur® XP 2840 | | | - | - | - | - | 40.0 | - | - | - | - | - | - |
| Desmodur® 2873 | | | - | - | - | - | - | 78.0 | - | - | - | - | - |
| Desmodur® Z 4470 BA | | | - | - | - | - | - | - | 2.9 | 5.5 | - | - | - |
| Desmodur® blulogiq 3190 | | | - | - | - | - | - | - | - | - | 48.0 | - | - |
| Desmodur® BL 3175 SN | | | - | - | - | - | - | - | - | - | - | 82.0 | - |
| Desmodur® eco N 7300 | | | - | - | - | - | - | - | - | - | - | - | 42.0 |
| NCO/OH equivalent ratio | | | 1.0 | 1.0 | 1.0 | 1.0 | 1.0 | 1.0 | 1.0 | 1.0 | 1.0 | 1.0 | 1.0 |
| **Performance test results** | | | | | | | | | | | | | |
| Adhesion | | | 5B | 5B | 5B | 5B | 5B | 5B | 5B | 5B | 5B | 5B | 5B |
| Gloss (60°) | | | 91 | 90 | 88 | 90 | 89 | 88 | 88 | 88 | 89 | 82 | 88 |
| Scratch test | Copper brush | Reflow effects | ++ | ++ | ++ | ++ | ++ | ++ | ++ | ++ | ++ | ++ | ++ |
| | | Time required for reflowing | <1 min | <1 min | <1 min | <1 min | <1 min | <1 min | <1 min | <1 min | <1 min | <1 min | <1 min |
| | Steel wool 000# | Reflow effects | ++ | ++ | ++ | ++ | ++ | ++ | ++ | ++ | ++ | ++ | ++ |
| | | Time required for reflowing | <1 min | <1 min | <1 min | <1 min | <1 min | <1 min | <1 min | <1 min | <1 min | <1 min | <1 min |

It can be seen from Table 6 that the coating composition of the present invention can be combined with different types of polyisocyanates, coatings formed thereform have good appearance and excellent adhesion as well as rapid reflowing at normal temperature.

**Table 7: the components and performance test results of Inventive Example 2 and Comparative Examples 13-14 (unit of each component: g)**

| **Components** | | | **Example 2** | **Comp. Ex. 13** | **Comp. Ex. 14** |
|---|---|---|---|---|---|
| Desmophen® XP 2488 | | | 16.7 | - | - |
| Desmophen® C 1100 | | | 31.0 | 31.0 | 31.0 |
| Desmophen® 670 | | | - | 16.7 | - |
| Desmophen® 1100 | | | - | - | 16.7 |
| Butyl acetate/xylene/propylene glycol methyl ether acetate | | | 69.0 | 54.0 | 57.0 |
| (formulated in a mixing ratio of 1:1:1 by mass) | | | | | |
| Desmodur® N 3580 BA | | | 59.0 | 28.0 | 34.0 |
| **NCO/OH equivalent ratio** | | | 1.0 | 1.0 | 1.0 |
| **Performance test results** | | | | | |
| Adhesion | | | 5B | 5B | 5B |
| Gloss (60°) | | | 91 | 90 | 90 |
| Scratch test | Copper brush | Reflow effects | ++ | - | - |
| | | Time required for reflow | <1 min | N/A | N/A |
| | Steel wool 000# | Reflow effects | ++ | -- | - |
| | | Time required for reflow | <1 min | N/A | N/A |

It can be seen from Table 7 that, when the polyester polyol has a hydroxyl content of <10 wt. %, a coating formed from the coating composition has very poor reflowing at normal temperature.

It is apparent to those skilled in the art that the present invention is not limited to the foregoing specific details, and the present invention can be implemented in other specific forms without departing from the spirit or main characteristics thereof. Accordingly, the above examples should be considered illustrative rather than limiting from any perspective, thus the scope of the present invention is indicated by the claims rather than the above description, and any change should be considered belonging to the present invention as long as the change belongs to the meaning and scope of the equivalents of the claims.

## Claims

1. A coating composition comprising:
A) a hydroxyl-containing component consisting of:
a) a polyester-modified polycarbonate polyol having a number-average molecular weight (determined by gel permeation chromatography (GPC) in accordance with DIN 55672-1:2016-03 using polystyrene as standard and tetrahydrofuran as eluent) of 500-6000 g/mol, the amount of which is greater than 50 wt. % based on that the weight of the hydroxyl-containing component is 100 wt. %,
b) an optional polyester polyol having a hydroxyl content of not less than 10 wt. % as measured in accordance with DIN EN ISO 4629-2, and
c) an optional polyacrylate polyol; and
B) a polyisocyanate;
the equivalent ratio of isocyanate groups to hydroxyl groups of the composition being 0.5-1.2.

2. The composition according to claim 1, **characterized in that** the polyester-modified polycarbonate polyol is a polyester-modified aliphatic polycarbonate polyol.

3. The composition according to claim 1, **characterized in that** the polyester-modified polycarbonate polyol has a number-average molecular weight of 650-4000 g/mol, preferably 750-2000 g/mol.

4. The composition according to claim 1, **characterized in that** the polyester-modified polycarbonate polyol has a hydroxyl content of 1.5-5 wt. % as measured in accordance with DIN EN ISO 4629-2, and a viscosity of 2500-18000 mPa·s as measured in accordance with DIN EN ISO 3219.

5. The composition according to claim 1, **characterized in that** the polyester-modified polycarbonate polyol is a polycaprolactone-modified aliphatic polycarbonate polyol.

6. The composition according to any one of claims 1-5, **characterized in that** the polyester-modified polycarbonate polyol has an infrared characteristic peak at 1153-1173 cm⁻¹ as measured with a Frontier™-series Fourier transform infrared spectrometer from PerkinElmer, Inc.

7. The composition according to any one of claims 1-5, **characterized in that** the polyester-modified polycarbonate polyol is in an amount of 55-100 wt. %, preferably not less than 55 wt. % and less than 80 wt. % based on that the weight of the hydroxyl-containing component is 100 wt. %.

8. The composition according to claim 1, **characterized in that** the polyester polyol has a number-average molecular weight of 200-5000 g/mol, preferably 200-2000 g/mol, and a viscosity of 1500-15000 mPa·s as measured in accordance with DIN EN ISO 3219.

9. The composition according to claim 1, **characterized in that** the polyester polyol has a hydroxyl content of 10-20 wt. % as measured in accordance with DIN EN ISO 4629-2.

10. The composition according to claim 1, **characterized in that** the polyacrylate polyol has a hydroxyl content of 2-5 wt. % as measured in accordance with DIN EN ISO 4629-2, and a viscosity of 2500-4000 mPa·s as measured in accordance with DIN EN ISO 3219.

11. The composition according to claim 1, **characterized in that** the polyacrylate polyol is in an amount of not greater than 10 wt. % based on that the weight of the hydroxyl-containing component is 100 wt. %.

12. The composition according to claim 1, **characterized in that** the polyisocyanate has an isocyanate group functionality of not less than 2, preferably not less than 3 and most preferably not less than 4.

13. The composition according to claim 1 or 12, **characterized in that** the polyisocyanate is one or more selected from the group consisting of: aliphatic diisocyanates, alicyclic diisocyanates, aromatic diisocyanates, aliphatic triisocyanates, alicyclic triisocyanates, aromatic triisocyanates and their derivatives having iminooxadiazinedione, isocyanurate, uretdione, carbamate, allophanate, biuret, urea, oxadiazinetrione, oxazolidone, acylurea and/or carbodiimide structures.

14. The composition according to claim 1, **characterized in that** the equivalent ratio of isocyanate groups to hydroxyl groups of the composition is 0.9-1.2, most preferably 1.0-1.2.

15. A method for preparing the coating composition according to any one of claims 1-14, comprising the steps of:
mixing a), optional b) and optional c) to obtain A); and
mixing A) and B) to obtain the composition.

16. Use of the coating composition according to any one of claims 1-14 in the protection of a substrate surface or a substrate surface coating.

17. The use according to claim 16, **characterized in that** the substrate is selected from artificial stones, woods, artificial woods, marbles, terrazzos, ceramics, linoleums, metals, mineral materials, plastics, rubbers, concretes, composite boards, papers, leathers and glasses.

18. A coating method comprising applying the coating composition according to any one of claims 1-14 onto a substrate.

19. A coated product comprising a substrate and a coating formed by applying the coating composition according to any one of claims 1-14 onto the substrate.

20. The coated product according to claim 19, **characterized in that** the product is selected from windows, mirrors, furniture, floors, vehicles, road signs, bridges, books, boxes, films and lenses, most preferably selected from furniture, floors, films and vehicles.
